# EUROPÄISCHE PATENTANMELDUNG

(11) **EP 4 782 244 A1**
(43) Veröffentlichungstag der Anmeldung: **29.07.2026**
(21) Anmeldenummer: 25222798.8
(22) Anmeldetag: 12.12.2025
(51) Int. Cl.: B60K 35/10, B60K 35/21, B60K 35/22, B60K 35/29, B60K 35/80, E02F 9/20

(54) **BEDIENSYSTEM, INSBESONDERE FÜR EINE SELBSTFAHRENDE BAUMASCHINE**

(30) Priorität: 22.01.2025 DE 102025102191
(71) Anmelder: Hamm AG, 95643 Tirschenreuth (DE)
(72) Erfinder: Kreger, Marco, 95643 Tirschenreuth (DE); Reif, Gernot, 91058 Erlangen (DE); Gmeiner, Michael, 95643 Tirschenreuth (DE); Krockauer, Rainer, 95703 Plößberg (DE)
(74) Vertreter: Ruttensperger Lachnit Trossin Gomoll

(57) **Zusammenfassung**

Ein Bediensystem, insbesondere für eine selbstfahrende Baumaschine, umfasst ein erstes Bedienorgan (28), wobei das erste Bedienorgan (28) zur Auswahl einer Funktion aus einer Mehrzahl auswählbarer Funktionen in einer ersten Bewegungsart zu bewegen ist und zur Bestätigung der Auswahl einer Funktion der Mehrzahl auswählbarer Funktionen in einer zweiten Bewegungsart zu bewegen ist, wobei dem ersten Bedienorgan (28) eine erste Beleuchtungseinheit (36) zum Beleuchten des ersten Bedienorgans (28) zugeordnet ist, sowie einen Bildschirm zur Anzeige der vermittels des ersten Bedienorgans (28) auswählbaren oder/und ausgewählten Funktionen, wobei wenigstens einer, vorzugsweise jeder, Funktion der Mehrzahl auswählbarer Funktionen eine Funktion-Farbcodierung zugeordnet ist, und wobei die erste Beleuchtungseinheit (36) dazu ausgebildet ist, nach Auswahl oder/und Bestätigung der Auswahl einer der Funktionen vermittels des ersten Bedienorgans (28) das erste Bedienorgan (28) in einer der Funktion-Farbcodierung der ausgewählten Funktion entsprechenden Farbe zu beleuchten.

## Beschreibung

Die vorliegende Erfindung betrifft ein Bediensystem, welches dazu genutzt werden kann, eine selbstfahrende Baumaschine, wie zum Beispiel einen selbstfahrenden Bodenverdichter oder dergleichen, zu bedienen.

Da selbstfahrende Baumaschinen über eine Vielzahl von Funktionen verfügen, die durch eine Bedienperson wahlweise aktiviert oder deaktiviert oder beispielsweise in ihrer Intensität variiert werden können, ist es erforderlich, Bediensysteme vorzusehen, über welche verschiedene Funktionen ausgewählt und aktiviert bzw. deaktiviert werden können. Beispielsweise können sogenannte Dreh/Drück-Steller verwendet werden, mit welchen beispielsweise durch Drehen eine Auswahl und durch Drücken eine Bestätigung der Auswahl bzw. eine Aktivierung oder Deaktivierung der ausgewählten Funktion erfolgen kann. Andere bekannte Bediensystem nutzen alternativ oder zusätzlich Touchscreens, über welche durch Berührung eines berührungsempfindlichen Bildschirms Funktionen ausgewählt bzw. ausgewählte Funktionen aktiviert und deaktiviert werden können.

Es ist die Aufgabe der vorliegenden Erfindung, ein Bediensystem, insbesondere für eine selbstfahrende Baumaschine, vorzusehen, welches bei einfacher Bedienbarkeit dazu beiträgt, das Entstehen von Bedienungsfehlern zu vermeiden.

Erfindungsgemäß wird diese Aufgabe gelöst durch ein Bediensystem, insbesondere für eine selbstfahrende Baumaschine, umfassend:
- ein erstes Bedienorgan, wobei das erste Bedienorgan zur Auswahl einer Funktion aus einer Mehrzahl auswählbarer Funktionen in einer ersten Bewegungsart zu bewegen ist und zur Bestätigung der Auswahl einer Funktion der Mehrzahl auswählbarer Funktionen in einer zweiten Bewegungsart zu bewegen ist, wobei dem ersten Bedienorgan eine erste Beleuchtungseinheit zum Beleuchten des ersten Bedienorgans zugeordnet ist,
- einen Bildschirm zur Anzeige der vermittels des ersten Bedienorgans auswählbaren oder/und ausgewählten Funktionen,
wobei wenigstens einer, vorzugsweise jeder, Funktion der Mehrzahl auswählbarer Funktionen eine Funktion-Farbcodierung zugeordnet ist, und wobei die erste Beleuchtungseinheit dazu ausgebildet ist, nach Auswahl oder/und Bestätigung der Auswahl einer der Funktionen vermittels des ersten Bedienorgans das erste Bedienorgan in einer der Funktion-Farbcodierung der ausgewählten Funktion entsprechenden Farbe zu beleuchten.

Bei dem erfindungsgemäßen Bediensystem besteht eine Wechselwirkung zwischen der Darstellung der verschiedenen auswählbaren Funktionen auf dem Bildschirm und der farblichen Hervorhebung des ersten Bedienorgans. Wurde vermittels einer Bedienperson eine der auf dem Bildschirm mit verschiedenen Funktion-Farbcodierungen angezeigten Funktionen durch entsprechende Betätigung des ersten Bedienorgans ausgewählt, kann erfindungsgemäß vorgesehen sein, dass die Bedienperson anhand der Übereinstimmung der Farbe, in welcher das erste Bedienorgan beleuchtet ist, und der der ausgewählten Funktion zugeordneten Funktion-Farbcodierung allein bei Betrachtung des ersten Bedienorgans und ohne Betrachtung des Bildschirms erkennen kann, welche Funktion ausgewählt ist. Insbesondere kann vorgesehen sein, dass beim Durchschalten durch verschiedene Funktionen die Beleuchtungsfarbe des ersten Bedienorgans jeweils der Funktion-Farbcodierung der aktuell ausgewählten Funktion entspricht. Alternativ kann die erste Beleuchtungseinheit dazu ausgebildet sein, das erste Bedienorgan erst dann mit einer einer ausgewählten Funktion zugeordneten Funktion-Farbcodierung entsprechenden Farbe zu beleuchten, wenn durch entsprechende Betätigung des ersten Bedienorgans die Auswahl bestätigt wurde.

Bei einer aufgrund einer deutlichen Unterscheidung der verschiedenen Bewegungsarten besonders einfach und funktionssicher zu bedienenden Ausgestaltung kann das erste Bedienorgan zum Bewegen in der erste Bewegungsart um eine Drehachse zu drehen sein und zum Bewegen in der zweiten Bewegungsart in Richtung der Drehachse zu verschieben sein. Bei dieser Ausgestaltung ist das erste Bedienorgan als Dreh/Drück-Steller ausgebildet.

Insbesondere dann, wenn in Zuordnung zu einer jeweiligen auswählbaren Funktion mehrere verschiedene Funktionsmodi auswählbar sind, um beispielsweise die ausgewählte Funktion in verschiedenen Intensitätsstufen durchzuführen, kann vorgesehen sein, dass der Bildschirm dazu ausgebildet ist, nach Auswahl einer der Funktionen eine Mehrzahl der ausgewählten Funktion zugeordneter auswählbarer Funktionsmodi anzuzeigen, und das erste Bedienorgan kann zum Auswählen eines Funktionsmodus der Mehrzahl auswählbarer Funktionsmodi in der ersten Bewegungsart zu bewegen sein und zur Bestätigung der Auswahl eines Funktionsmodus der Mehrzahl auswählbarer Funktionsmodi in der zweiten Bewegungsart zu bewegen sein.

Um auch bei den verschiedenen auswählbaren Funktionsmodi durch farbliche Hervorhebung diese für eine Bedienperson leichter identifizierbar darzustellen, kann bei wenigstens einer, vorzugsweise jeder, Funktion der Mehrzahl auswählbarer Funktionen wenigstens einem, vorzugsweise jedem, dieser zugeordneten Funktionsmodus der Mehrzahl auswählbarer Funktionsmodi eine Funktionsmodus-Farbcodierung zugeordnet sein, und die erste Beleuchtungseinheit kann dazu ausgebildet sein, nach Auswahl oder/und Bestätigung der Auswahl eines der Funktionsmodi vermittels des ersten Bedienorgans das erste Bedienorgan in einer der Funktionsmodus-Farbcodierung des ausgewählten Funktionsmodus entsprechenden Farbe zu beleuchten.

Um durch eine zu große Anzahl verschiedener Beleuchtungs- bzw. Darstellungsfarben induzierte Irritationen und daraus resultierende Bedienungsfehler zu vermeiden, wird vorgeschlagen, dass bei wenigstens einer, vorzugsweise jeder, Funktion der Mehrzahl auswählbarer Funktionen wenigstens zwei, vorzugsweise allen, dieser zugeordneten Funktionsmodi die selbe Funktionsmodus-Farbcodierung zugeordnet ist.

Wenn bei wenigstens einer, vorzugsweise jeder, Funktion der Mehrzahl auswählbarer Funktionen bei wenigstens einem, vorzugsweise jedem, dieser zugeordneten Funktionsmodus die Funktionsmodus-Farbcodierung der Funktion-Farbcodierung der zugeordneten Funktion entspricht, wird die Gefahr einer durch zu viele verschiedene Farben induzierten Fehlbedienung weiter gemindert.

Bei einer besonders bevorzugten Ausgestaltung kann der Bildschirm ein Touchscreen sein, und wenigstens eine, vorzugsweise jede, Funktion der Mehrzahl auswählbarer Funktionen kann zusätzlich zu der Auswahl durch das erste Bedienorgan auch durch Berühren des Bildschirms auswählbar sein oder/und die Auswahl wenigstens einer, vorzugsweise jeder, Funktion der Mehrzahl auswählbarer Funktionen kann durch Berühren des Bildschirms bestätigbar sein.

Um unabhängig davon, auf welche Art und Weise eine Funktion ausgewählt wurde, einer Bedienperson das einfache Erkennen der Auswahl bzw. der Bestätigung zu erkennen zu geben, wird vorgeschlagen, dass die erste Beleuchtungseinheit dazu ausgebildet ist, nach Auswahl oder/und Bestätigung der Auswahl einer Funktion der Mehrzahl auswählbaren Funktionen durch Berühren des Bildschirms das erste Bedienorgan in einer der Funktion-Farbcodierung der ausgewählten Funktion entsprechenden Farbe zu beleuchten.

Wenn in Zuordnung zu einer bzw. mehreren der auswählbaren Funktionen mehrere Funktionsmodi auswählbar sind, kann weiter vorgesehen sein, dass wenigstens ein, vorzugsweise jeder, Funktionsmodus der Mehrzahl auswählbarer Funktionsmodi durch Berühren des Bildschirms auswählbar ist oder/und die Auswahl wenigstens eines, vorzugsweise jedes, Funktionsmodus der Mehrzahl auswählbarer Funktionsmodi durch Berühren des Bildschirms bestätigbar ist.

Auch dabei ist es hinsichtlich der deutlichen Hervorhebung eines ausgewählten Funktionsmodus vorteilhaft, wenn die erste Beleuchtungseinheit dazu ausgebildet ist, nach Auswahl oder/und Bestätigung der Auswahl eines Funktionsmodus der Mehrzahl auswählbarer Funktionsmodi durch Berühren des Bildschirms das erste Bedienorgan in einer der Funktionsmodus-Farbcodierung des ausgewählten Funktionsmodus entsprechenden Farbe zu beleuchten.

Das erfindungsgemäße Bediensystem kann ferner wenigstens ein zweites Bedienorgan, beispielsweise Bedientaste, umfassen, wobei durch das wenigstens eine zweite Bedienorgan eine bezüglich ihrer Auswahl bestätigte Funktion aktivierbar oder/und deaktivierbar ist.

Dabei kann zur Erhöhung der Bediensicherheit vorgesehen sein, dass bei bezüglich ihrer Auswahl bestätigter Funktion ein dieser zugeordneter und bezüglich seiner Auswahl bestätigter Funktionsmodus durch das wenigstens eine zweite Bedienorgan aktivierbar oder/und deaktivierbar ist.

Zur Vermeidung von Fehlbedienungen kann in Zuordnung zu wenigstens einem Teil der Funktionen, vorzugsweise jeder Funktion, der Mehrzahl auswählbarer Funktionen jeweils ein zweites Bedienorgan vorgesehen sein.

Um auch eine farbliche Wechselwirkung zwischen dem wenigstens einen zweiten Bedienorgan und dem Bildschirm bzw. dem ersten Bedienorgan zu erreichen, wird vorgeschlagen, dass in Zuordnung zu dem wenigstens zweiten Bedienorgan eine zweite Beleuchtungseinheit vorgesehen ist, und dass die zweite Beleuchtungseinheit dazu ausgebildet ist, das wenigstens eine zweite Bedienorgan in einer der Funktion-Farbcodierung der bezüglich ihrer Auswahl bestätigten und durch das wenigstens eine zweite Bedienorgan zu aktivierenden oder/und deaktivierenden Funktion entsprechenden Farbe zu beleuchten.

Um für eine Bedienperson erkenntlich zu machen, dass keine Funktion ausgewählt ist, kann die zweite Beleuchtungseinheit dazu ausgebildet sein, bei nicht ausgewählter oder/und nicht bestätigter Funktion das wenigstens eine zweite Bedienorgan nicht oder in einer Neutralfarbe zu beleuchten.

Auch die erste Beleuchtungseinheit kann dazu ausgebildet sein, bei nicht ausgewählter oder/und nicht bestätigter Funktion das erste Bedienorgan nicht oder in einer Neutralfarbe zu beleuchten.

Für eine einfach durchzuführende Bedienung kann vorgesehen sein, dass das wenigstens eine zweite Bedienorgan als Drücktaster ausgebildet ist.

Die vorliegende Erfindung betrifft ferner eine selbstfahrende Baumaschine, insbesondere Bodenbearbeitungsmaschine, wie zum Beispiel Bodenverdichter, umfassend ein erfindungsgemäß aufgebautes Bediensystem.

Die vorliegende Erfindung wird nachfolgend mit Bezug auf die beiliegenden Figuren detailliert beschrieben. Es zeigt:
- Fig. 1: eine Seitenansicht einer als Bodenverdichter ausgebildeten selbstfahrenden Baumaschine;
- Fig. 2: eine Seitenansicht eines als Dreh/Drück-Steller ausgebildeten Bedienorgans für ein Bediensystem beispielsweise der Baumaschine der Fig. 1;
- Fig. 3: einen Bildschirm des Bediensystems mit einer Mehrzahl von daran angezeigten Funktionen, wobei in Zuordnung zu einer ausgewählten Funktion eine Mehrzahl dieser zugeordneter Funktionsmodi angezeigt ist;
- Fig. 4: eine der Fig. 3 entsprechende Darstellung eines Bildschirms, wobei in Zuordnung zu einer anderen ausgewählten Funktion mehrere auswählbare Funktionsmodi angezeigt sind;
- Fig. 5: ein Bedienfeld mit einer Mehrzahl von als Drücktaster ausgebildeten Bedienorganen;
- Fig. 6: in ihren Darstellungen 6a und 6b eine alternative Ausgestaltung eines Bedienfeldes mit einem ein Bedienorgan bereitstellenden Drücktaster;
- Fig. 7: einen Abschnitt einer Armlehne mit in diese integrierten Systembereichen des Bediensystems.

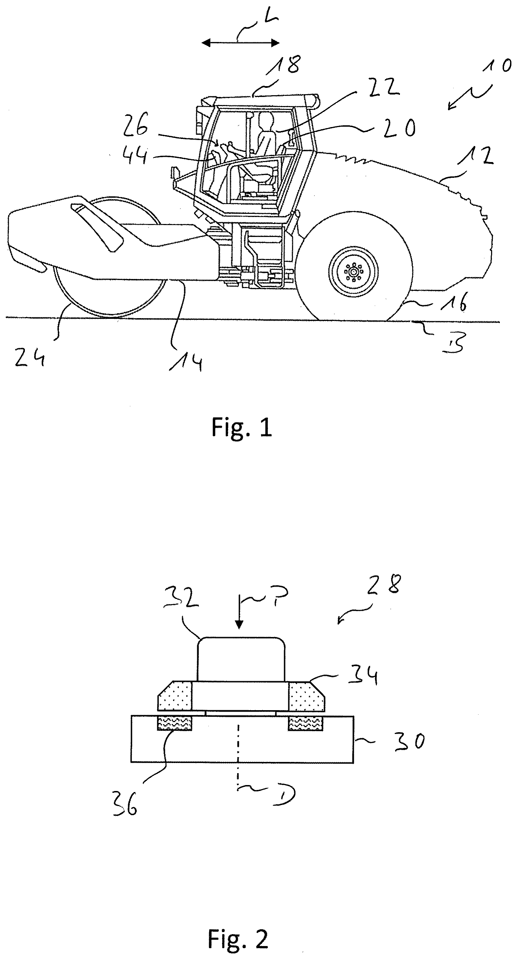

Die Fig. 1 zeigt in Seitenansicht eine als Bodenverdichter ausgebildete selbstfahrende Baumaschine 10, die in einer im Wesentlichen auch einer Bewegungsrichtung entsprechenden Längsrichtung L aufeinander folgend einen Hinterwagen 12 und einen Vorderwagen 14 umfasst. Am Hinterwagen 12 sind durch ein an diesem auch vorgesehenes Antriebsaggregat zum Bewegen der Baumaschine 10 über einen Untergrund B angetriebene Räder 16 sowie auch ein Bedienstand 18 vorgesehen. Auf einem im Bedienstand 18 angeordneten Sitz 20 kann eine die Baumaschine 10 bedienende Bedienperson 22 Platz finden. Am Vorderwagen 14 ist eine Bodenbearbeitungswalze 24 um eine Walzendrehachse drehbar getragen, so dass beim Bewegen über den Untergrund B dieser durch die Belastung vermittels der Bodenbearbeitungswalze 24 verdichtet wird.

Im Bedienstand 18 ist ein nachfolgend detailliert beschriebenes Bediensystem 26 vorgesehen, welches durch die Bedienperson 22 zum Bedienen der Baumaschine 10 genutzt werden kann.

Es ist zunächst darauf hinzuweisen, dass die in Fig. 1 anhand eines einen Vorderwagen 14 und einen Hinterwagen 12 umfassenden Bodenverdichters dargestellte Baumaschine 10 nur ein Beispiel einer Vielzahl verschiedener durch das nachfolgend detailliert beschriebene Bediensystem 26 bedienbarer Baumaschinen ist. Beispielsweise könnte auch ein in anderer Weise konfigurierter Bodenverdichter eine derartige Baumaschine 10 bilden. Ein derartiger Bodenverdichter könnte beispielsweise ein schemelgelenkter Bodenverdichter sein, welcher an einem Maschinenrahmen zwei jeweils eine Bodenbearbeitungswalze tragende Lenkschemel aufweist, die zum Lenken des Bodenverdichters bezüglich des Maschinenrahmens verschwenkbar sind. Auch andere Arten von Baumaschinen, wie z. B. Radlader, Bagger, Stra-ßenfräsen oder dergleichen, können vermittels eines derartigen Bediensystems 26 durch eine Bedienperson 22 bedient werden.

Die Fig. 2 zeigt als wesentlichen Bestandteil des Bediensystems 26 ein als Dreh/Drück-Steller ausgebildetes erstes Bedienorgan 28. Das erste Bedienorgan 28 umfasst einen an einem Sockel 30 um eine Drehachse D drehbar getragenen und in Richtung der Drehachse D auf den Sockel 30 zu verschiebbaren Steller 32. Wie nachfolgend detailliert beschrieben, kann der Steller 32 in einer ersten Bewegungsart um die Drehachse D gedreht werden und in einer zweiten Bewegungsart in Richtung eines Pfeils P auf den Sockel 30 zu bewegt werden.

Der Steller 32 kann in einem die Drehachse D ringartig umgebenden Außenumfangsbereich 34 transparent ausgebildet sein, so dass durch diesen Außenumfangsbereich 34 hindurch vermittels einer am Sockel 30 vorgesehenen ersten Beleuchtungseinheit 36 generiertes Licht sichtbar ist bzw. der Steller 32 in der Farbe des durch die erste Beleuchtungseinheit 36 emittierten Lichts sichtbar ist. Die erste Beleuchtungseinheit 36 kann ebenfalls die Drehachse D ringartig umgebend ausgebildet sein und kann zum Erzeugen von Licht verschiedener Farben als sogenannte RGB-LED (Rot-Gelb-Blau-LED) ausgebildet sein.

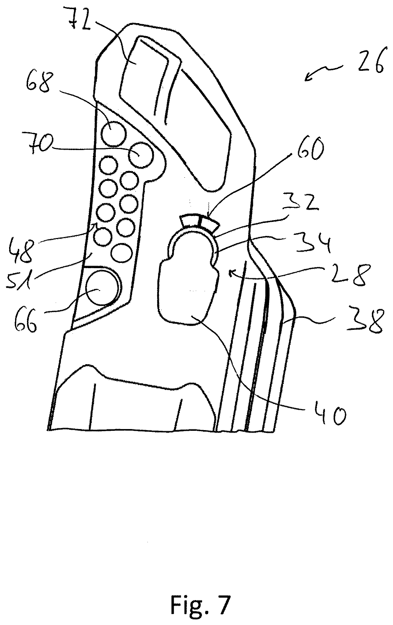

Das erste Bedienorgan 28 kann, wie in Fig. 7 veranschaulicht, in eine seitlich neben dem Sitz 32 im Bedienstand 18 vorgesehene Armlehne 38 integriert sein. In Zuordnung zu dem ersten Bedienorgan 28 bzw. dem Steller 32 desselben kann eine Handauflage 40 vorgesehen sein, so dass in ergonomisch vorteilhafter Weise die Bedienperson 22 den Steller 32 mit auf der Handauflage 40 ruhender Hand betätigen kann.

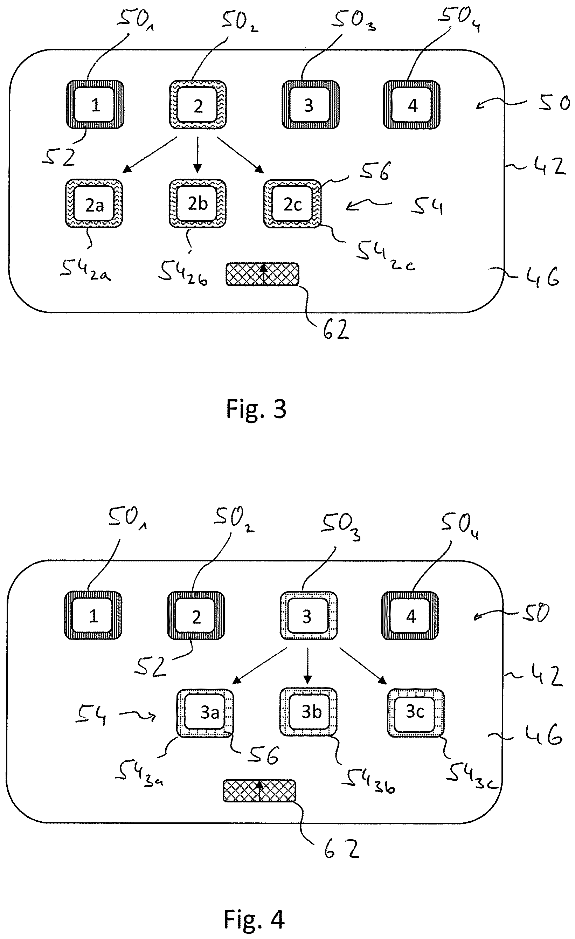

Das Bediensystem 26 umfasst als weiteren Bestandteil einen in Fig. 3 prinzipartig dargestellten Bildschirm 42. Der Bildschirm 42 kann beispielsweise an einem vor dem Sitz 20 positionierten Armaturenbereich 44 im Sichtfeld der Bedienperson 22 angeordnet sein, könnte grundsätzlich aber auch in die Armlehne 38 integriert sein. Der Bildschirm 42 ist vorteilhafterweise als Touchscreen ausgeführt und weist eine berührungsempfindliche Oberfläche 46 auf, so dass durch Berühren der berührungsempfindlichen Oberfläche 46 Bedienbefehle durch die Bedienperson 22 über den Bildschirm 42 in das Bediensystem 26 eingegeben werden können. Mit dem als Touchscreen ausgebildeten Bildschirm 42 und dem als Dreh/Drück-Steller ausgebildeten ersten Bedienorgan 28 sind somit in das Bediensystem 26 zwei Systembereiche integriert, über welche die Bedienperson 22 Bedienbefehle eingeben kann.

Beispielsweise integriert in die Armlehne 38 ist eine Mehrzahl von als Drücktaster ausgebildeten zweiten Betätigungsorganen 48 vorgesehen. Hierzu kann beispielsweise an der Armlehne 38 ein diese zweiten Betätigungsorgane 48 zusammenfassendes Bedienfeld 51 vorgesehen sein, welches seitlich neben den ersten Betätigungsorgan 28 positioniert ist und somit durch die Bedienperson bei auf der Handauflage 40 aufliegender Hand auch bedienbar ist. Das Bedienfeld 51 mit den daran vorgesehenen zweiten Bedienorganen 48 stellt einen dritten Systembereich des Bediensystems 26 bereit, über welchen die Bedienperson 22 in nachfolgend beschriebener Art und Weise Bedienbefehle in das Bediensystem 26 eingeben kann.

Die Fig. 3 veranschaulicht, dass auf den Bildschirm 42 beispielsweise in Form von Kacheln oder anderen Anzeigesymbolen eine Mehrzahl von durch die Bedienperson 22 auswählbaren Funktionen 50 angezeigt werden kann. Im dargestellten Beispiel sind dies vier jeweils durch eine Kachel repräsentierte Funktionen 50₁, 50₂, 50₃, 50₄. Beispiele für derartige Funktionen sind beispielsweise die Verdichtungsart, also Vibration oder/und Oszillation, die Berieselung der Verdichterwalze 24 beispielsweise mit Wasser oder/und Additiv, ein Spurversatz der an einem schemelgelenkten Bodenverdichter vorgesehenen Verdichterwalzen, allgemein auch als Hundegang bezeichnet, die Beleuchtungsfunktion, der Betrieb eines Splittstreuers, der Betrieb eines Kantenandrückgeräts, der Betrieb einer Heiz- und Klimaanlage, der Betrieb eines Audiosystems und dergleichen. Durch Drehen des Stellers 32 kann die Bedienperson 22 eine der auf dem Bildschirm 42 angezeigten Funktionen 50₁, 50₂, 50₃, 50₄ auswählen.

Um der Bedienperson das Erkennen der verschiedenen Funktionen auch dann, wenn diese mit größerer Konzentration den vor der Baumaschine 10 liegenden Boden 14 beobachtet, zu erleichtern, ist jeder auf dem Bildschirm 42 dargestellten Funktion 50₁, 50₂, 50₃, 50₄ eine Funktion-Farbcodierung beispielsweise durch einen die jeweilige Anzeigekachel umgebenden farbigen Randbereich 52 zugeordnet. Dabei kann beispielsweise vorgesehen sein, dass eine jeweilige Funktion 50₁, 50₂, 50₃, 50₄ dann mit der jeweiligen Funktion-Farbcodierung angezeigt wird, wenn durch Drehen des Stellers 32 eine Funktion ausgewählt wurde. Alle zu diesem Zeitpunkt nicht ausgewählten Funktionen, im Ausgestaltungsbeispiel der Fig. 3 also die Funktionen 50₁, 50₃, 50₄, werden in einer Neutralfarbe, beispielsweise in weiß, angezeigt. Eine derartige neutrale Farbe ist also im Sinne der vorliegenden Erfindung eine Farbe, welche keiner Funktion als Funktion-Farbcodierung zugeordnet ist.

Ist eine der Funktionen 50₁, 50₂, 50₃, 50₄ ausgewählt und dementsprechend auf dem Bildschirm 42 mit der zugeordneten Funktion-Farbcodierung dargestellt, wird die erste Beleuchtungseinheit 36 derart betrieben, dass diese Licht der gleichen Farbe erzeugt und somit den Steller 32 bzw. das erste Bedienorgan 28 in der Farbe beleuchtet und erscheinen lässt, welche der Funktion-Farbcodierung der ausgewählten Funktion, in diesem Falle der Funktion 50₂, entspricht. Somit ergibt sich für die Bedienperson 22 in den beiden Systembereichen Bildschirm 42 einerseits und erstes Bedienorgan 28 andererseits ein konsistenter optischer Eindruck, so dass für die Bedienperson 22 bereits ein kurzer bzw. flüchtiger Blick entweder auf den Bildschirm 42 oder das erste Bedienorgan 28 zu erkennen gibt, welche Funktion ausgewählt wurde. Dabei ist zu berücksichtigen, dass eine Bedienperson 22, welche im Umgang mit der Baumaschine 10 geübt ist, weiß, welche Funktion-Farbcodierung welcher Funktion zugeordnet ist. Die Möglichkeit, die ausgewählte Funktion sowohl am Bildschirm 42, als auch am ersten Bedienorgan 28 wahrnehmen zu können, ist vor allem dann von besonderem Vorteil, wenn die Baumaschine 10 beispielsweise bei Dunkelheit betrieben wird.

Nach Auswahl einer der angezeigten und zur Auswahl stehenden Funktionen 50₁, 50₂, 50₃, 50₄, in dem in Fig. 3 dargestellten Beispiel also der Funktion 50₂, bestätigt die Bedienperson 22 diese Auswahl durch Niederdrücken und dabei Verschieben des Stellers 32 in Richtung des Pfeils P auf den Sockel 30 zu.

Nach Bestätigung der ausgewählten Funktion, im Falle des Beispiels der Fig. 3 der Funktion 50₂, können auf dem Bildschirm 42 in Zuordnung zu dieser ausgewählten Funktion 50₂ zur Verfügung stehende bzw. auswählbare Funktionsmodi 54 angezeigt oder, sofern sie bereits vorher angezeigt wurden, beispielsweise optisch hervorgehoben werden. In dem in Fig. 3 dargestellten Zustand existieren zur Funktion 50₂ drei Funktionsmodi 54₂ₐ, 54_{2b}, 54_{2c}. Wenn beispielsweise die Funktion 50₂ die Berieselung der Verdichterwalze 24 wiedergibt, können beispielsweise die Funktionsmodi 54₂ₐ, 54_{2b}, 54_{2c} die Intensität der Berieselung reflektieren.

Durch Bewegen des Stellers 32 des ersten Bedienorgans 28 in der ersten Bewegungsart, also durch Drehen um die Drehachse D, kann einer der Funktion 50₂ zugeordneten Funktionsmodi 54₂ₐ, 54_{2b}, 54_{2c} ausgewählt werden. Nach erfolgter Auswahl kann durch Bewegen in der zweiten Bewegungsart, also durch Niederdrücken des Stellers 32, der ausgewählte Funktionsmodus dann bestätigt werden.

Jedem zu einer jeweiligen Funktion 50₁, 50₂, 50₃, 50₄ zugeordneten Funktionsmodus 54₂ₐ, 54₂₆, 54_{2c} ist eine Funktionsmodus-Farbcodierung zugeordnet. Auch diese kann beispielsweise durch eine farbige Umrandung 56 einer einen jeweiligen Funktionsmodus 54₂ₐ, 54_{2b}, 54_{2c} darstellenden Anzeigekachel wiedergegeben werden. Um Irritationen durch zu viele verschiedene angezeigte Farbcodierungen zu vermeiden, ist vorzugsweise vorgesehen, dass bei den einer jeweiligen Funktion 50 zugeordneten Funktionsmodi 54 die jeweilige Funktionsmodus-Farbcodierung der Funktion-Farbcodierung der zugeordneten Funktion entspricht. Im Zustand der Fig. 3 bedeutet dies, dass die drei Funktionsmodi 54₂ₐ, 54_{2b}, 54_{2c} mit einer Funktionsmodus-Farbcodierung zur Anzeige gebracht werden, welche der Funktion-Farbcodierung der Funktion 50₂ entspricht. Gleichzeitig wird auch das erste Bedienorgan 28 durch entsprechende Ansteuerung der ersten Beleuchtungseinheit 36 nach Auswahl und Bestätigung beispielsweise der Funktion 50₂ mit der dieser Funktion und auch den dieser zugeordneten Funktionsmodi 54₂ₐ, 54_{2b}, 54_{2c} zugeordneten Farbcodierung bzw. Farbe beleuchtet.

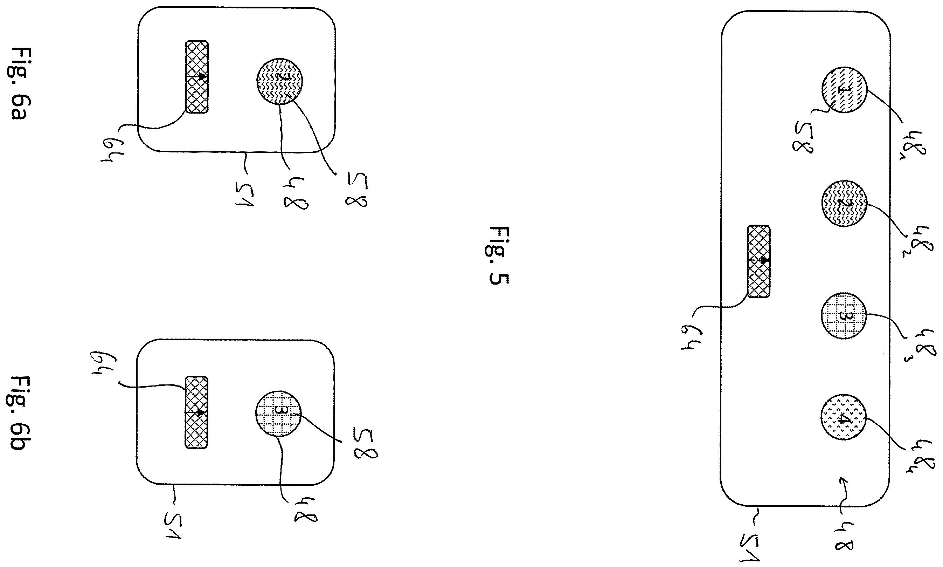

Nach Auswahl und Bestätigung einer der Funktionen 50 und Auswahl und Bestätigung eines der der ausgewählten und bestätigten Funktion zugeordneten Funktionsmodi 54 ist es erforderlich, die ausgewählte und bestätigte Funktion mit dem ausgewählten und bestätigten Funktionsmodus zu aktivieren. Im Falle der Berieselung bedeutet dies beispielsweise, dass nach Auswahl der Berieselung und der Intensität der Berieselung und auch Bestätigung der Auswahl die Berieselung noch nicht beginnt. Erst dann, wenn beispielsweise die Baumaschine 10 den Ort erreicht hat, an welchem die Berieselung einsetzen soll, wird die Berieselung durch Betätigung von einem der zweiten Bedienorgane 48 des Bedienfeldes 51 aktiviert bzw. nach bereits erfolgter Aktivierung wieder deaktiviert. Hierzu zeigt die Fig. 5 beispielhaft das Bedienfeld 51 mit den vier den Funktionen 50₁, 50₂, 50₃, 50₄ zugeordneten und als Drücktaster ausgebildeten zweiten Bedienorganen 48₁, 48₂, 48₃, 48₄. Um auch hier ein konsistentes Erscheinungsbild zu erzeugen, ist vorteilhafterweise jedes dieser einer speziellen Funktion zugeordneten zweiten Bedienorgan 48₁, 48₂, 48₃, 48₄ durch eine jeweils zugeordnete zweite Beleuchtungseinheit 58 derart beleuchtet, dass dieses in einer der Funktion-Farbcodierung der zugeordneten Funktion entsprechenden Farbe beleuchtet wird bzw. für die Bedienperson 22 sichtbar ist. Hier kann beispielsweise vorgesehen sein, dass, solange eine Funktion 50 nicht ausgewählt oder/und bestätigt ist, das zugeordnete zweite Bedienorgan 48 nicht oder in einer Neutralfarbe, beispielsweise weißer Farbe, beleuchtet wird. Nach Auswahl einer Funktion 50 kann dann das der ausgewählten Funktion zugeordnete zweite Bedienorgan 48 in der Farbe beleuchtet werden, die der Funktion-Farbcodierung der zugeordneten und ausgewählten Funktion entspricht.

Nach Auswahl und Bestätigung einer Funktion 50 und Auswahl und Bestätigung eines dieser Funktion zugeordneten Funktionsmodus 54 vermittels des ersten Bedienorgans 28 und Aktivierung der ausgewählten und bestätigten Funktion mit dem ausgewählten und bestätigten Funktionsmodus wird durch Betätigung des zugeordneten zweiten Bedienorgans 48 die Funktion aktiviert bzw. der zugeordnete Systembereich in Betrieb gesetzt bzw. durch erneute Betätigung deaktiviert und wieder außer Betrieb gesetzt.

Die Fig. 4 veranschaulicht einen Zustand, in welchem durch entsprechende Betätigung des ersten Bedienorgans 28 die Funktion 50₃ ausgewählt und bestätigt wurde und dementsprechend die dieser Funktion 50₃ zugeordneten Funktionsmodi 54₃ₐ, 54_{3b}, 54_{3c} zur Anzeige gebracht oder hervorgehoben werden. Nach Auswahl und Bestätigung von einem dieser drei Funktionsmodi 54₃ₐ, 54_{3b}, 54_{3c} kann dann durch Einwirkung auf das zweite Bedienorgan 48₃ die zugeordnete Funktion mit dem ausgewählten und bestätigten Funktionsmodus aktiviert werden.

Bei Funktionen, welchen keine differenzierenden Funktionsmodi zugeordnet sind, kann beispielsweise vorgesehen sein, dass nach Auswahl einer entsprechenden Funktion auf dem Bildschirm 42 keine Funktionsmodi angezeigt werden, wodurch der Bedienperson 22 signalisiert wird, dass dann die ausgewählte und bestätigte Funktion unmittelbar durch Einwirkung auf das zugeordnete zweite Bedienorgan 48 aktiviert bzw. wieder deaktiviert werden kann.

Um nach Auswahl und Bestätigung und auch Aktivierung einer Funktion bzw. eines Funktionsmodus auch eine oder mehrere andere Funktionen bzw. Funktionsmodi aktivieren zu können, kann eine Zurück-Funktion vorgesehen sein, die beispielsweise durch an der Armlehne 38 im Bereich des ersten Bedienorgans 28 vorgesehene Tasten 60 aktiviert werden kann. Die Zurück-Funktion führt in eine vorangehende Anzeigeebene zurück, so dass beispielsweise nachdem entsprechend dem Zustand der Fig. 3 die in Zuordnung zur Funktion 50₂ existierenden Funktionsmodi 54₂ₐ, 54_{2b}, 54_{2c} angezeigt wurden und einer dieser Funktionsmodi 54₂ₐ, 54_{2b}, 54_{2c} ausgewählt und dann auch bestätigt wurde und gegebenenfalls diese Funktion auch aktiviert wurde, durch Aktivierung der Zurück-Funktion wieder in einen Zustand übergegangen wird, in welchem durch Einwirkung auf das erste Betätigungsorgan 28 eine der auswählbaren Funktionen 50₁, 50₂, 50₃, 50₄ angezeigt wird und beispielsweise keine zugeordneten Funktionsmodi angezeigt werden, worauf folgend beispielsweise bei weiterhin aktivierter Funktion 50₂ die Funktion 50₃ ausgewählt und bestätigt und nach Anzeige der dieser zugeordneten Funktionsmodi 54₃ₐ, 54_{3b}, 54_{3c} einer dieser Funktionsmodi 54₃ₐ, 54_{3b}, 54_{3c} ausgewählt und bestätigt werden kann und durch Einwirkung auf das zweite Bedienorgan 48₃ diese Funktion mit dem ausgewählten und bestätigten Funktionsmodus aktiviert werden kann.

Insbesondere bei Ausgestaltung des Bildschirms 42 als Touchscreen mit einer berührungsempfindlichen Oberfläche 46 kann bei dem Bediensystem 26 auch vorgesehen sein, dass die vorangehend beschriebenen Auswahl- und Bestätigungsvorgänge nicht nur vermittels des ersten Bedienorgans 28 durchgeführt werden können, sondern auch durch Einwirkung auf die berührungsempfindliche Oberfläche 46. Beispielsweise kann nach Anzeige der vier Funktionen 50₁, 50₂, 50₃, 50₄ beispielsweise durch Berühren der berührungsempfindlichen Oberfläche 46 im Bereich der die Funktion 50₂ repräsentierenden Kachel diese Funktion ausgewählt werden. Nach erfolgter Auswahl kann durch erneutes Berühren der die Funktion 50₂ repräsentierenden Kachel diese Auswahl bestätigt werden oder es kann bereits die durch einmaliges Berühren der berührungsempfindlichen Oberfläche 46 erfolgte Auswahl auch als Bestätigung gewertet werden. Um dann einen der zugeordneten Funktionsmodi 54₂ₐ, 54_{2b}, 54_{2c} auszuwählen, wird die berührungsempfindliche Oberfläche 46 im Bereich einer der die Funktionsmodi 54₂ₐ, 54_{2b}, 54_{2c} repräsentierenden Kacheln berührt, wobei eine Bestätigung entweder bereits durch die einmalige Berührung oder durch erneutes Berühren erfolgt. Die Aktivierung der auf diese Art und Weise vermittels des Bildschirms 52 ausgewählten und bestätigten Funktion mit dem ausgewählten und bestätigten Funktionsmodus erfolgt dann wieder durch Betätigen des dieser Funktion zugeordneten zweiten Bedienorgans 48₂.

Auch die Zurück-Funktion kann durch Berühren des Bildschirms 42 bzw. der berührungsempfindlichen Oberfläche 46 im Bereich einer die Zurück-Funktion repräsentierenden Kachel 62 angewählt werden. Alternativ oder zusätzlich kann am Bedienfeld 51 ein die Zurück-Funktion repräsentierender bzw. bei entsprechender Betätigung aktivierender Taster 64 vorgesehen sein.

Da abhängig von der Art der Baumaschine 10 mit dem Bediensystem eine Vielzahl verschiedener Funktionen auswählbar sein kann, kann es vorteilhaft sein, am Bedienfeld 51 nicht in Zuordnung zu jeder auswählbaren Funktion ein eigenes zweites Bedienorgan 48 vorzusehen. Beispielsweise kann, wie dies in den Fig. 6a und 6b veranschaulicht ist, ein einziges zweites Bedienorgan 48 mit einer diesem zugeordneten zweiten Beleuchtungseinheit 58 vorgesehen sein. Nach Auswahl einer der auswählbaren Funktionen 50, beispielsweise der Funktion 50₂ im Zustand der Fig. 3, kann die dem einzigen zweiten Bedienorgan 48 zugeordnete zweite Beleuchtungseinheit 58 derart angesteuert bzw. betrieben werden, dass das zweite Bedienorgan 48 mit einer Farbe beleuchtet wird, die der Funktion-Farbcodierung der in diesem Zustand ausgewählten Funktion 50₂ entspricht. Dabei ist es wieder unerheblich, ob diese Auswahl und ggf. Bestätigung vermittels des ersten Bedienorgans 28 oder des als Touchscreen ausgebildeten Bildschirms 42 erfolgt ist. Durch Einwirkung auf das zweite Bedienorgan 48 kann dann im Falle des Zustands der Fig. 6a die Funktion 50₂ mit dem ausgewählten und bestätigten Funktionsmodus aktiviert bzw. deaktiviert werden. In dem in Fig. 6b dargestellten Zustand mit Auswahl und Bestätigung der Funktion 50₃ und Auswahl und Bestätigung eines der drei Funktionsmodi 54₃ₐ, 54_{3b}, 54_{3c} kann durch Einwirkung auf das zweite Bedienorgan 48 des Bedienfeldes 51, welches in diesem Zustand dann in einer Farbe beleuchtet ist, die der Funktion-Farbcodierung der Funktion 50₃ entspricht, diese Funktion aktiviert und auch wieder deaktiviert werden.

Im Zusammenhang mit den zweiten Bedienorganen 48 kann unabhängig davon, ob jeder auswählbaren Funktion 50 ein separates zweites Bedienorgan 48 zugeordnet ist oder ob ein oder ggf. auch mehrere zweite Bedienorgane 48 jeweils mehreren auswählbaren Funktionen 50 zugeordnet sind, auch vorgesehen sein, dass eine Beleuchtung der zweiten Bedienorgane 48 mit der einer jeweiligen Funktion zugeordneten Farbe erst dann erfolgt, wenn eine vollständige Auswahl und Bestätigung der Auswahl durchgeführt wurde. Existieren zu einer auswählbaren Funktion 50 mehrere auswählbare Funktionsmodi 54, bleibt das zugeordnete bzw. zu benutzende zweite Bedienorgan 48 solange unbeleuchtet oder in einer Neutralfarbe beleuchtet, solange kein auszuwählender Funktionsmodus ausgewählt und bestätigt wurde. Erst dann, wenn klar definiert ist, welche Funktion mit welchem Funktionsmodus aktiviert werden soll, wird das bzw. das zugeordnete zweite Bedienorgan 48 in der entsprechenden Farbe beleuchtet, so dass für die Bedienperson 22 erkennbar ist, dass erst in diesem Zustand eine Aktivierung eines der ausgewählten Funktion zugeordneten Systembereichs der Baumaschine 10 möglich ist. Existieren zu einer auswählbaren Funktion 50 keine Funktionsmodi, kann bereits nach Auswahl und Bestätigung dieser Funktion die bzw. die zugeordnete zweite Bedieneinheit 48 in der entsprechenden Farbe beleuchtet werden, so dass der Bedienperson 22 signalisiert wird, dass eine Aktivierung der ausgewählten und auch bestätigten Funktion möglich ist.

Bei dem Bediensystem 26 kann insbesondere auch vorgesehen sein, dass das erste Bedienorgan 28 in einem Zustand, in welchem keine Funktion ausgewählt oder/und bestätigt ist, in einer Neutralfarbe beleuchtet wird. Der Übergang zu einer Beleuchtung mit einer Farbe, welche der Farbe der Funktion-Farbcodierung einer ausgewählten Funktion entspricht, kann dann erfolgen, wenn die Funktion durch Bewegen des Stellers 32 in der ersten Bewegungsart ausgewählt wurde, oder kann auch erst dann erfolgen, wenn durch Bewegen des Stellers 32 in der zweiten Bewegungsart die Auswahl der Funktion bestätigt wurde. Auch bei Auswahl einer Funktion vermittels des als Touchscreen ausgebildeten Bildschirms 42 kann der Übergang von der Beleuchtung in einer Neutralfarbe, also beispielsweise weiß, zur Beleuchtung mit einer Farbe, welche der Funktion-Farbcodierung der ausgewählten Funktion entspricht, dann erfolgen, wenn beispielsweise durch einmaliges Berühren des Bildschirms 42 eine Funktion ausgewählt wurde und ggf. durch einmalige Berührung bereits auch bestätigt wurde, oder kann auch erst dann erfolgen, wenn nach erfolgter Auswahl durch erneutes Berühren die Auswahl der ausgewählten Funktion bestätigt wurde.

Abschließend ist noch darauf hinzuweisen, dass das Bediensystem 26, beispielsweise integriert in die in Fig. 7 dargestellte Armlehne 38, noch weitere Bedienelemente aufweisen kann. So kann beispielsweise in das Bedienfeld 51 ein Not-Aus-Schalter 66 integriert sein, dessen Betätigung die sofortige Deaktivierung aller Systembereiche bzw. der gesamten Baumaschine 10 zur Folge hat. Auch ein Start/Stopp-Schalter 68 bzw. ein eine Parkbremse aktivierender und deaktivierender Schalter 70 sowie auch ein zum Bewegen der Baumaschine 10 durch die Bedienperson 22 nach Art eines Joysticks zu betätigender Fahrhebel 72 können in die Armlehne 38 integriert sein.

## Patentansprüche

1. Bediensystem, insbesondere für eine selbstfahrende Baumaschine, umfassend:
- ein erstes Bedienorgan (28), wobei das erste Bedienorgan (28) zur Auswahl einer Funktion (50) aus einer Mehrzahl auswählbarer Funktionen (50) in einer ersten Bewegungsart zu bewegen ist und zur Bestätigung der Auswahl einer Funktion (50) der Mehrzahl auswählbarer Funktionen (50) in einer zweiten Bewegungsart zu bewegen ist, wobei dem ersten Bedienorgan (28) eine erste Beleuchtungseinheit (36) zum Beleuchten des ersten Bedienorgans (28) zugeordnet ist,
- einen Bildschirm (42) zur Anzeige der vermittels des ersten Bedienorgans (28) auswählbaren oder/und ausgewählten Funktionen (50),
wobei wenigstens einer, vorzugsweise jeder, Funktion (50) der Mehrzahl auswählbarer Funktionen (50) eine Funktion-Farbcodierung zugeordnet ist, und wobei die erste Beleuchtungseinheit (36) dazu ausgebildet ist, nach Auswahl oder/und Bestätigung der Auswahl einer der Funktionen (50) vermittels des ersten Bedienorgans (28) das erste Bedienorgan (28) in einer der Funktion-Farbcodierung (50₂; 50₃) der ausgewählten Funktion entsprechenden Farbe zu beleuchten.

2. Bediensystem nach Anspruch 1,
**dadurch gekennzeichnet, dass** das erste Bedienorgan (28) zum Bewegen in der erste Bewegungsart um eine Drehachse (D) zu drehen ist und zum Bewegen in der zweiten Bewegungsart in Richtung der Drehachse (D) zu verschieben ist.

3. Bediensystem nach Anspruch 1 oder 2,
**dadurch gekennzeichnet, dass** der Bildschirm dazu ausgebildet ist, nach Auswahl einer der Funktionen (50) eine Mehrzahl der ausgewählten Funktion (50₂; 50₃) zugeordneter auswählbarer Funktionsmodi (54) anzuzeigen, und dass das erste Bedienorgan (28) zum Auswählen eines Funktionsmodus (54) der Mehrzahl auswählbarer Funktionsmodi (54) in der ersten Bewegungsart zu bewegen ist und zur Bestätigung der Auswahl eines Funktionsmodus (54) der Mehrzahl auswählbarer Funktionsmodi (54) in der zweiten Bewegungsart zu bewegen ist.

4. Bediensystem nach Anspruch 3,
**dadurch gekennzeichnet, dass** bei wenigstens einer, vorzugsweise jeder, Funktion (50) der Mehrzahl auswählbarer Funktionen (50) wenigstens einem, vorzugsweise jedem, dieser zugeordneten Funktionsmodus (54) der Mehrzahl auswählbarer Funktionsmodi (54) eine Funktionsmodus-Farbcodierung zugeordnet ist, und dass die erste Beleuchtungseinheit (36) dazu ausgebildet ist, nach Auswahl oder/und Bestätigung der Auswahl eines der Funktionsmodi (54) vermittels des ersten Bedienorgans (28) das erste Bedienorgan (28) in einer der Funktionsmodus-Farbcodierung des ausgewählten Funktionsmodus entsprechenden Farbe zu beleuchten, vorzugsweise wobei
bei wenigstens einer, vorzugsweise jeder, Funktion (50) der Mehrzahl auswählbarer Funktionen (50) wenigstens zwei, vorzugsweise allen, dieser zugeordneten Funktionsmodi (54) die selbe Funktionsmodus-Farbcodierung zugeordnet ist.

5. Bediensystem nach Anspruch 4,
**dadurch gekennzeichnet, dass** bei wenigstens einer, vorzugsweise jeder, Funktion (50) der Mehrzahl auswählbarer Funktionen (50) bei wenigstens einem, vorzugsweise jedem, dieser zugeordneten Funktionsmodus (54) die Funktionsmodus-Farbcodierung der Funktion-Farbcodierung der zugeordneten Funktion (50) entspricht.

6. Bediensystem nach einem der Ansprüche 1-5,
**dadurch gekennzeichnet, dass** der Bildschirm (42) ein Touchscreen ist, und dass wenigstens eine, vorzugsweise jede, Funktion (50) der Mehrzahl auswählbarer Funktionen (50) durch Berühren des Bildschirms (42) auswählbar ist oder/und die Auswahl wenigstens einer, vorzugsweise jeder, Funktion (50) der Mehrzahl auswählbarer Funktionen (50) durch Berühren des Bildschirms (42) bestätigbar ist, vorzugsweise wobei
die erste Beleuchtungseinheit (36) dazu ausgebildet ist, nach Auswahl oder/und Bestätigung der Auswahl einer Funktion (50) der Mehrzahl auswählbarer Funktionen (50) durch Berühren des Bildschirms (42) das erste Bedienorgan (28) in einer der Funktion-Farbcodierung der ausgewählten Funktion (50₁; 50₃) entsprechenden Farbe zu beleuchten.

7. Bediensystem nach Anspruch 5 oder 6, sofern auf Anspruch 3 rückbezogen, **dadurch gekennzeichnet, dass** wenigstens ein, vorzugsweise jeder, Funktionsmodus (54) der Mehrzahl auswählbarer Funktionsmodi (54) durch Berühren des Bildschirms (42) auswählbar ist oder/und die Auswahl wenigstens eines, vorzugsweise jedes, Funktionsmodus (54) der Mehrzahl auswählbarer Funktionsmodi (54) durch Berühren des Bildschirms (42) bestätigbar ist.

8. Bediensystem nach Anspruch 7, sofern auf Anspruch 4 rückbezogen **dadurch gekennzeichnet, dass** die erste Beleuchtungseinheit (36) dazu ausgebildet ist, nach Auswahl oder/und Bestätigung der Auswahl eines Funktionsmodus (54) der Mehrzahl auswählbarer Funktionsmodi (54) durch Berühren des Bildschirms (42) das erste Bedienorgan (28) in einer der Funktionsmodus-Farbcodierung des ausgewählten Funktionsmodus (50₂; 50₃) entsprechenden Farbe zu beleuchten.

9. Bediensystem nach einem der Ansprüche 1-8,
**dadurch gekennzeichnet, dass** wenigstens ein zweites Bedienorgan (48) vorgesehen ist, und dass durch das wenigstens eine zweite Bedienorgan (48) eine bezüglich ihrer Auswahl bestätigte Funktion (50₂; 50₃) aktivierbar oder/ und deaktivierbar ist.

10. Bediensystem nach Anspruch 9, sofern auf Anspruch 3 rückbezogen, **dadurch gekennzeichnet, dass** bei bezüglich ihrer Auswahl bestätigter Funktion (50₂; 50₃) ein dieser zugeordneter und bezüglich seiner Auswahl bestätigter Funktionsmodus durch das wenigstens eine zweite Bedienorgan (48) aktivierbar oder/und deaktivierbar ist.

11. Bediensystem nach Anspruch 9 oder 10,
**dadurch gekennzeichnet, dass** in Zuordnung zu wenigstens einem Teil der Funktionen (50), vorzugsweise jeder Funktion (50), der Mehrzahl auswählbarer Funktionen (50) jeweils ein zweites Bedienorgan (48) vorgesehen ist.

12. Bediensystem nach einem der Ansprüche 9-11,
**dadurch gekennzeichnet, dass** in Zuordnung zu dem wenigstens einen zweiten Bedienorgan (48) eine zweite Beleuchtungseinheit (58) vorgesehen ist, und dass die zweite Beleuchtungseinheit (58) dazu ausgebildet ist, das wenigstens eine zweite Bedienorgan (48) in einer der Funktion-Farbcodierung der bezüglich ihrer Auswahl bestätigten und durch das wenigstens eine zweite Bedienorgan (48) zu aktivierenden oder/und deaktivierenden Funktion (50₂; 50₃) entsprechenden Farbe zu beleuchten, vorzugsweise wobei
die zweite Beleuchtungseinheit (58) dazu ausgebildet ist, bei nicht ausgewählter oder/und nicht bestätigter Funktion das wenigstens eine zweite Bedienorgan (48) nicht oder in einer Neutralfarbe zu beleuchten.

13. Bediensystem nach einem der Ansprüche 9-12,
**dadurch gekennzeichnet, dass** das wenigstens eine zweite Bedienorgan als Drücktaster ausgebildet ist.

14. Bediensystem nach einem der Ansprüche 1-13,
**dadurch gekennzeichnet, dass** die erste Beleuchtungseinheit (36) dazu ausgebildet ist, bei nicht ausgewählter oder/und nicht bestätigter Funktion das erste Bedienorgan (28) nicht oder in einer Neutralfarbe zu beleuchten.

15. Selbstfahrende Baumaschine, insbesondere Bodenbearbeitungsmaschine, umfassend ein Bediensystem (26) nach einem der Ansprüche 1-14.
